Europäisches Patentamt

European Patent Office

Office européen des brevets

(11) Publication number: **0 038 571**
**B1**

# (12) EUROPEAN PATENT SPECIFICATION

(45) Date of publication of patent specification: **16.10.85**

(21) Application number: **81103049.3**

(22) Date of filing: **22.04.81**

(51) Int. Cl.⁴: **G 01 N 30/90,** B 01 J 20/08,
B 01 J 20/32

(54) **Water-resistant reversed-phase thin layer chromatographic plate and a method for its preparation.**

(30) Priority: **22.04.80 JP 53814/80**

(43) Date of publication of application:
**28.10.81 Bulletin 81/43**

(45) Publication of the grant of the patent:
**16.10.85 Bulletin 85/42**

(84) Designated Contracting States:
**CH DE FR IT LI NL**

(56) References cited:
**DE-A-2 042 729**
**DE-A-2 605 789**
**FR-A-2 021 451**
**FR-A-2 383 690**
**US-A-3 677 410**

(73) Proprietor: **Shionogi & Co., Ltd.**
**5-12-4, Sagisu**
**Fukushima-ku Osaka, 553 (JP)**

(72) Inventor: **Okumura, Tamotsu**
**2-13-35-508, Nishishoji**
**Mino-shi Osaka Pref. (JP)**
Inventor: **Kadono, Tetsuro**
**4-14-10, Takayanagi**
**Neyagawa-shi Osaka Pref. (JP)**

(74) Representative: **Vossius Vossius Tauchner**
**Heunemann Rauh**
**Siebertstrasse 4 P.O. Box 86 07 67**
**D-8000 München 86 (DE)**

Courier Press, Leamington Spa, England.

**Description**

The present invention generally relates to the art of thin layer chromatography. Particularly, it is concerned with conversion of the conventional chromatographic plate into a reversed-phase chromatographic plate and a method for preparing the plates.

It is widely known that reversed-phase chromatography is useful in separating labile compounds which are difficult to separate by normal-phase chromatography.

In general the art of reversed-phase chromatography is useful for the separation or identification of natural substances or synthetic organic compounds such as steroid hormones, vitamins, naturally occurring or semi-synthetic antibiotics or synthetic bactericidal agents. The thin layer chromatographic plate can also be used for prefixing conditions under which conventional column chromatography or high performance liquid chromatography of the reversed-phase system could be performed.

In order to properly perform the reversed-phase thin layer chromatography, it is essential to intentionally reduce the chromatographic activity of the adsorbent to the limit of ascension of the solvent for development. In other words, a satisfactory adsorbent activity should be maintained to an extent that the developing solvent can naturally ascend at least 10 cm from the spotted line, because pressure cannot be utilized to exert on the mobile phase.

Description of the prior art

As alkylsilylated adsorbent, silica gel having a monomethylsilyloxy, dimethylsilyloxy, octylsilyloxy or dodecylsilyloxy group is known, and, at first sight, there seems to be no obstacle to obtaining a plate for reversed-phase thin layer chromatography by forming a layer with one of these adsorbents. Its actual preparative procedure is, however, not necessarily easy, and the resulting plates are not always satisfactory in many respects, as explained later in the Description of the Preferred Embodiments as comparative preparations.

In addition to this, a uniform alkylsilylation of the entire surface of the Al- or Si-oxide adsorbent layer for the intended purpose while retaining its ascending tendency to an acceptable extent is not always possible by a conventional method wherein the layer is simply contacted with an alkylsilylating agent such as alkylchlorosilane.

FR—A—2 383 690 discloses a water-resistant thin layer chromatographic silica gel adsorbent plate for reversed phase TLC comprising alkylsilylation but it fails to disclose the particular advantages of the partially tri-(lower alkyl)-silylated plates.

According to the DE—A—2 605 789, the performance of alkylsilylated adsorbents in bonded-phase liquid chromatography can be improved by introducing trimethylsilyloxy and/or triethylsilyloxy groups. This modification of the hydroxyl groups of the adsorbent should be performed as completely as possible whereas, according to the present invention, only a partial modification of said hydroxyl groups is to be obtained. This document is also silent about the use and the advantage of the partially tri-(lower alkyl)silylated adsorbent of the invention for TLC.

FR—A—2 021 451 discloses chromatographic adsorbents for the exclusive use in HPLC, as opposed to the present invention which relates to an improvement of the chromatographic plate for use in TLC and in which the adsorbent layer on the plates is silylated in situ.

Summary of the invention

It is therefore the primary object of the present invention to provide a thin layer chromatographic plate for use in reversed-phase chromatography.

It is another object of the present invention to provide a method for preparing the thin layer chromatographic plate adopted in the reversed-phase chromatography.

According to one aspect of the present invention there is provided a water-resistant reversed-phase thin layer chromatographic silica gel or alumina adsorbent plate with alkylsilylated hydroxyl groups, wherein 10—40% of the hydroxyl groups in the adsorbent are tri-(lower alkyl)-silylated.

The suitability of the various types of alkylsilyl groups and the extent of the alkylsilylation have been determined by the present inventors on the basis of the results of the experiments which will be disclosed later in the Description of the Preferred Embodiments, as contrasted with the results obtained with known adsorbents for use in reversed-phase chromatography.

Thus, after investigating the various types of alkylsilyloxy groups and the extent of the alkylsilylation, it was found that a tri-(lower alkyl)silyloxy group is superior to any of the mono-(lower alkyl)silyloxy, di-(lower alkyl)silyloxy and mono-(higher alkyl)silyloxy groups which are known in the art, and that it is most suitable if from 10 to 40 percent of the chromatographically active groups (hydroxyl groups) which are left after the layer has formed on the base plate are replaced by tri-(lower alkyl)silyloxy groups, and that it is most preferred if the proportion of replaced hydroxyl groups is 23% or thereabouts.

The stated preferred ranges (10 to 40%, 15 to 30%, and 23%) can alternatively be expressed as carbon contents of the alkylsilylated adsorbent by elementary analysis of the adsorbent as 3—10%, 4—7% and 5.5%, respectively. A similar qualification as is applied to the silica gel adsorbent can also be applied to other adsorbents such as alumina and the like. Said adsorbent may further include an acid-resistant fluorescent material.

# 0 038 571

The term "lower alkyl" as used in this context denotes a straight or branched alkyl group with 1 to 6 carbon atoms, preferably 1 to 3 carbon atoms. The methyl group is also highly preferred.

The base plate and the binding agent for supporting the chromatographic layer and for holding the adsorbent particles in the layer must, of course, be water-resistant and acid-resistant. The base plate can be exemplified as soda-lime glass as the most popular one but not excluding the use of any equivalent material such as polyolefines, polytetrafluoroolefines and metals of titanium in some exceptional cases.

As the binding agent, gypsum hemihydrate can be used for most purposes but may be modified by the incorporation of sodium methacrylate or the like if a binding property of a particularly high degree is required. Commercially available inorganic adhesives such as Ceramabond® (Nissan Chemical Industries Co., Ltd.) and Sumiceram® (Sumitomo Chemical Industries Ltd.) can also be used.

If highly water-resistant and acid-resistant properties are required, a binding agent of glass powder employed in a sintered plate (disclosed in Japanese Patents Nos. 654,737 and 657,467 by the present inventors) may also be used.

In another aspect of the present invention there is provided a method for preparing the improved chromatographic plate according to claim 6. A base plate which had previously been coated with a silica gel or alumina adsorbent layer in a conventional manner is soaked in a solution containing an alkylsilylating agent such as tri-(lower alkyl)chlorosilane, O-methyl-o-trimethylsilylmethylketone acetal or BSTFA in a concentration of 0.1—10%, under atmospheric pressure at 10—30°C for 10—30 minutes. It is also found that the soaking operation may more preferably be performed under a slightly reduced pressure of about 40 mbar in order to obtain a more uniform alkylsilylated layer.

The qualification on the method has also been determined on the basis of the results of the experiments which will be disclosed later.

## Description of the preferred embodiments

In the following description, the present invention will be elucidated in more detail by referring to the preferred embodiments on the basis of the results of comparative experiments made in order to determine the critical qualification of the invention.

## Example 1

(1) Preparation of the plate:

In accordance with a conventional method, an aqueous mixture of silica gel (Merck: Silica Gel for Thin Layer Chromatography, H 60, 30 g) and gypsum hemihydrate (7.5 g) is applied on a base plate (20×20 cm, 2 mm in thickness) to form a thin layer of 0.6 mm thickness. The thickness of the thin layer, measured after drying, is 0.3 mm. In preparing a fluorescent plate, a commercially available fluorescent material (magnesium wolframate or yttrium vanadate, activated with europium or the like) or fluorescent crystallized glass (zinc orthosilicate, activated with manganese or calcium wolframate, activated with manganese and lead, Japanese unexamined patent publication No. 64,993/1977) may be added to the aqueous mixture in 3 w/w % of the silica gel.

One of the thus obtained plates or a commercially available precoated plate [for instance, Merck: Silica Gel 60 (Cat. No. 5,715) and Mackery Nagel: M.N. SIL G-25 (Cat. No. 21,031)] is subjected to alkylsilylation under the conditions shown below:

Silylating agent:
i) Methyltrichlorosilane (RP-1, Wako Chemical Co., Ltd.)
ii) Dimethyldichlorosilane (RP-2, Wako Chemical)
iii) Trimethylchlorosilane (RP-3, Wako Chemical)
iv) Octyltrichlorosilane (RP-8, Tokyo Kasei Co., Ltd.)
v) Dodecyltrichlorosilane (RP-12, Tokyo, Kasei)
vi) Octadodecyltrichlorosilane (RP-18, Tokyo Kasei)

Solvent: Chloroform or Dichloromethane.
Concentration: 0.6, 1.25, 2.5, 5 and 10 (w/w%).

The plate is soaked in a solution of one of the listed silylating agents and maintained under a slightly reduced pressure (40 mbar) at 25°C for 30 minutes, then lifted and dried in a conventional manner.

The dried plate is then soaked in methanol to inactivate the unsilylated silanol residue and dried again to obtain a plate exemplified in Table 1 below.

3

TABLE 1

| Silylating agent | Carbon contents of the alkylsilylated adsorbent (%, elementary analysis) | Surface coverage by the alkylsilylation (%) |
|---|---|---|
| RP-1 | 3.70—4.10 | 46.8—51.9 |
| RP-2 | 4.63—4.73 | 29.5—30.0 |
| RP-3 | 4.86—6.13 | 20.5—25.8 |
| RP-8 | 7.48—7.78 | 11.9—12.4 |
| RP-12 | 10.17 | 10.7 |
| RP-18 | 13.48—14.07 | 9.5—9.9 |

(1.25 w/w% Chloroform solution of alkylchlorosilane)

(2) Evaluation of the alkylsiloxy groups:

1) Separation of steroid hormones:

Separation of a sample of steroid is performed by reversed-phase chromatography employing the six plates listed in Table 1 above, to give results summarized in Table 2 below.

TABLE 2

Rf value (×100) of the steroid hormones

| | Betamethasone | | | Average separation factor* ($\bar{a}$) | Solvent front | Developing time (min./10cm) |
|---|---|---|---|---|---|---|
| Plate | (free) | (21-acetate) | (17,21-di-propionate) | | | |
| RP-1 | 71 | 65 | 50 | 1.20 | Normal | 60 |
| RP-2 | 59 | 50 | 29 | 1.45 | " | 60 |
| RP-3 | 57 | 48 | 27 | 1.49 | " | 60 |
| RP-8 | 63 | 55 | 36 | 1.34 | Irregular | 70 |
| RP-12 | 58 | 51 | 32 | 1.35 | " | 100 |
| RP-18 | 54 | 48 | 31 | 1.34 | " | 120 |

Developing solvent:

Methanol: water (2:1, v/v) for RP-1—RP-3,

Methanol: water (3:1, v/v) for RP-8—RP-18.

(Excessively great water-repelling property of RP-8—RP-18, failed in development with the former solvent system of 2:1)

*Average separation factor ($\bar{a}$): a mean value of quotient obtained by dividing high Rf value by low Rf value.

As indicated in Table 2 above, the plate RP-3 shows a maximum average separation factor to represent the best separation. With the increase in the water content in the mobile phase, the separation is affected and the solvent front becomes indefinite and irregular in RP-8, RP-12 and RP-18.

Another series of the separation is performed on RP-1, RP-2 and RP-3 with a sample containing an additional compound (17-valerate) to give results as summarized in Table 3 below.

4

TABLE 3
Rf value (×100) of the steroid hormones

| Plate | (free) | Betamethasone (21-acetate) | (17-valerate) | (17,21-dipropionate) | Average separation factor $\bar{a}$ |
|-------|--------|------------------|---------------|----------------------|------------------------|
| RP-1 | 71 | 65 | 58 | 50 | 1.12 |
| RP-2 | 68 | 57 | 45 | 36 | 1.24 |
| RP-3 | 57 | 48 | 33 | 27 | 1.29 |

Developing solvent: Methanol:water (2:1, v/v)
Detection: Fluorescene quenching and staining with sulfuric acid.

In this case again, RP-3 plate shows a high average separation factor as compared with those of RP-1 and RP-2 plates and is found to have the maximum separation. These results, combined with those in Table 2, serve to demonstrate that the RP-3 plate is the most convenient for the reversed-phase chromatography of steroid hormones.

2) Sepration of cephalosporin antibiotics:
Three selected plates (RP-2, RP-3 and RP-18) in Table 1 are used in separating a sample containing four cephalosporin antibiotics (Cefaloridine, Cefaloglycine, Cefalexin and Cefalotin) to give the results summarized in Table 4 below.

TABLE 4
Rf value (×100) of the cephalosporins

| Plate | RP-2 | RP-3 | RP-18 |
|-------|------|------|-------|
| Cefaloridine | 34 | 25 | 17[t] |
| Cefaloglycine | 51[t] | 37 | 20[t] |
| Cefalolexin | 51[t] | 44 | 40[t] |
| Cefalotin | 58 | 56 | 75 |
| Average separation factor $(\bar{a})$ | 1.21 | 1.31 | 1.69 |
| Developing rate (Min./9 cm) | 75 | 90 | 105 |
| Chromatogram | Fair | Good | Poor |

([t]indicates a tailing spot)
Developing solvent:
    Methanol: water (1:4, v/v) for RP-2 and RP-3,
    Methanol: water (1:1, v/v) for RP-18.
Detection: Fluorescene quenching method, and staining with iodine vapour and ninhydrin.

As can be seen from Table 4, the plate RP-3 is the most suitable for the separation of the tested antibiotics sample containing four cephalosporins.
In this connection it is noteworthy that reversed-phase chromatography with organic mobile phases containing 50% of water (methanol: water=1:1) and 80% of water (methanol: water=1:4) cannot be applied to presently commercially available plates for reversed-phase chromatography.

3) Separation of synthetic bactericidal sulfonamides:
Three plates listed in Table 1 are used for separating a sample containing five types of sulfonamides and related compounds by reversed-phase chromatography to give the results summarized in Table 5 below.

5

0 038 571

TABLE 5

| Plate | Rf value (×100) of the sulfonamides | | |
| --- | --- | --- | --- |
| | RP-2 | RP-3 | RP-18 |
| N⁴-acetylsulfamethoxazole | 15 | 12 | 28[t] |
| Sulfamethoxazole | 25 | 24 | 49[t] |
| Sulfamerazine | 35 | 31 | 54 |
| Sulfadiazine | 75 | 67 | 86 |
| Sulfanilamide | 75 | 78 | 86 |
| Average separation factor ($\bar{\alpha}$) | 1.55 | 1.65 | 1.36 |
| Developing rate (Minutes/10 cm) | 95 | 95 | 90 |

([t]indicates tailing spots)
Developing solvent:
    Methanol: water (1:3) for RP-2 and RP-3
    Methanol: water (1:1) for RP-18
Detection: Fluorescence quenching, and staining with Ehrlich reagent or iodine vapour.

In this case again, it is found that the plate RP-3 is the most suitable for the separation as previously in the case of cephalosporin antibiotics. In particular, it is totally impossible to separate sulfadiazine and sulfanilamide on either of the plates RP-2 and RP-18.

(3) Evaluation of the concentration of the alkylsilylating agent:
    The effect of the change in the concentration of the alkylsilylating agent (RP-3) used in the preparation on the separation was investigated in a series of the reversed-phase chromatography on a steroid hormone sample to give the results shown in Table 6 below. Other conditions in the preparation are similar to those described in (1) above.

TABLE 6
Rf value (×100) of the steroid hormones

| Steroid | Concentration of trimethylchlorosilan (%, w/w) in chloroform | | | | |
| --- | --- | --- | --- | --- | --- |
| | 10 | 5 | 2.5 | 1.25 | 0.6 |
| Betamethasone | 45 | 58 | 63 | 63 | 75 |
| Betamethasone, 21-acetate | 32 | 48 | 54 | 54 | 63 |
| Betamethasone, 17-propionate | 27 | 40 | 48 | 48 | 55 |
| Betamethasone, 17, 21-dipropionate | 13 | 28 | 35 | 35 | 41 |
| Average separation factor ($\bar{\alpha}$) | 1.56 | 1.28 | 1.22 | 1.22 | 1.22 |

Developing solvent: Methanol: water (2:1, v/v)
Detection: Fluorescene quenching and staining with sulfuric acid.

From Table 6 it can be seen that the higher the concentration of the alkylsilylating agent the higher the average separation factor will be, but the smaller the Rf value will become, and that the small Rf values are stable in a concentration range of 0.6—2.5% w/w. The surface coverage by this alkylsilylation is in the range of approximately 20—26%.

Thus a concentration of the alkylsilylating agent in a range of 0.6—2.5% is sufficient for performing the alkylsilylation and one of approximately 1.25% is in general the most suitable for the purpose.

6

Example 2
(Preparation of plate with a glass binder):

In accordance with the method disclosed in Patents Nos. 654,737 and 657,467 corresponding to U.S. Patent No. 3,677,410, an acetone slurry containing either one of silica gel (Merck: Silica Gel H 60, 1 g) or alumina (Merck: Aluminum oxide T, 1 g), glass powder (soda-lime glass powder of 10 µm mean particle size, 3 g) and fluorescent material (Magnesium wolframate, 0.4 g) is applied on a glass plate (20×20 cm, thickness, 2 mm) to form a thin layer of 0.5 mm in thickness, dried and then sintered at 690°C for 8 minutes. The thickness of the sintered layer is about 0.2 mm in both the silica gel and alumina plates.

The thus obtained plates are processed to alkylsilylation in a manner similar to that described in Example 1 (1) to give plates for use in reversed-phase chromatography.

Of these, the trimethylsilylated plate (Rf-3) is used in separating a steroid hormone sample to give the results shown in Table 7 below.

TABLE 7

| Steroid | Rf values (×100) (silica gel) | (alumina) |
|---|---|---|
| Betamethasone | 77 | 91 |
| Betamethasone, 21-acetate | 70 | 90 |
| Betamethasone, 17-valerate | 52 | 71 |
| Betamethasone, 17,21-dipropionate | 41 | 43[t] |
| Average separation factor ($\overline{\alpha}$) | 1.24 | 1.31 |
| Developing rate (minutes/10 cm) | 80 | 90 |

Developing solvent: Methanol: water (2:1, v/v) (1:1, v/v)

**Claims**

1. A water-resistant reversed-phase thin layer chromatographic silica gel or alumina adsorbent plate with alkylsilylated hydroxyl groups, characterised in that 10—40% of the hydroxyl groups in the adsorbent are tri-(lower alkyl)-silylated.

2. A plate as claimed in Claim 1, wherein 15—30% of said hydroxyl groups are tri-(lower alkyl)silylated.

3. A plate as claimed in Claim 1, wherein 23% of said hydroxyl groups are tri-(lower alkyl)silylated.

4. A plate as claimed in Claim 1, wherein said hydroxyl groups are trimethylsilylated.

5. A plate as claimed in any of Claims 1 to 4, wherein said layer further includes an acid-resistant fluorescent material.

6. A method for preparing a water-resistant reversed-phase thin layer chromatographic silica gel or alumina adsorbent plate with alkylsilylated hydroxyl groups characterised by tri-(lower alkyl)silylating a conventional water-resistant thin layer chromatographic plate so that 10—40% of the hydroxyl groups in the adsorbent are tri-(lower alkyl)silylated.

7. A method as claimed in Claim 6, wherein 15—30% of said hydroxyl groups are tri-(lower alkyl)silylated.

8. A method as claimed in Claim 6, wherein 23% of said hydroxyl groups are tri-(lower alkyl)silylated.

9. A method as claimed in Claim 6, wherein said conventional plate is soaked in a 0.1 to 10 w/w% solution of an alkylsilylating agent in an organic solvent under atmospheric pressure at 10—30°C for 10—60 minutes.

10. A method as claimed in Claim 9, wherein said soaking operation is performed under a pressure of about 40 mbar.

11. A method as claimed in Claim 9, wherein said alkylsilylating agent is a tri-(lower alkyl)chlorosilane.

12. A method as claimed in Claim 9, wherein said alkylsilylating agent is trimethylchlorosilane.

**Patentansprüche**

1. Eine wasserbeständige "Reversed-Phase" dünnschichtchromatographische Kieselgel- oder Aluminiumoxid-Adsorptionsmittel-Platte mit alkylsilylierten Hydroxylgruppen, dadurch gekennzeichnet, daß 10 bis 40% der Hydroxylgruppen im Adsorptionsmittel tri-(niederalkyl)-silyliert sind.

2. Platte nach Anspruch 1, dadurch gekennzeichnet, daß 15 bis 30% der genannten Hydroxylgruppen tri-(niederalkyl)-silyliert sind.

3. Platte nach Anspruch 1, dadurch gekennzeichnet, daß 23% der genannten Hydroxylgruppen tri-(niederalkyl)silyliert sind.

4. Platte nach Anspruch 1, dadurch gekennzeichnet, daß die genannten Hydroxylgruppen trimethylsilyliert sind.

5. Platte nach jedem der Ansprüche 1 bis 4, dadurch gekennzeichnet, daß die genannte Schicht weiterhin ein säurefestes fluoreszierendes Material enthält.

6. Verfahren zur Herstellung einer wasserbeständigen Reversed-Phase dünnschichtchromatographische Kieselgel- oder Aluminiumoxid-Adsorptionsmittelplatte mit alkylsilylierten Hydroxylgruppen, dadurch gekennzeichnet, daß man eine übliche wasserbeständige dünnschichtchromatographische Platte tri-(niederalkyl)-silyliert, so daß 10 bis 40% der Hydroxylgruppen im Adsorptionsmittel tri-(niederalkyl)-silyliert sind.

7. Verfahren nach Anspruch 6, dadurch gekennzeichnet, daß 15 bis 30% der genannten Hydroxylgruppen tri-(niederalkyl)-silyliert sind.

8. Verfahren nach Anspruch 6, dadurch gekennzeichnet, daß 23% der genannten Hydroxylgruppen tri-(niederalkyl)-silyliert sind.

9. Verfahren nach Anspruch 6, dadurch gekennzeichnet, daß man die genannte gebräuchliche Platte in eine 0,1 bis 10 prozentige (Gewicht/Gewicht) Lösung eines alkylsilylierenden Mittels in einem organischen Lösungsmittel unter Atmosphärendruck bei 10 bis 30°C während 10 bis 60 Minuten eintaucht.

10. Verfahren nach Anspruch 9, dadurch gekennzeichnet, daß man Eintauchvorgang unter einem Druck von etwa 40 mbar durchführt.

11. Verfahren nach Anspruch 9, dadurch gekennzeichnet, daß das alkylsilylierende Mittel ein Tri-(niederalkyl)-chlorsilan ist.

12. Verfahren nach Anspruch 9, dadurch gekennzeichnet, daß das alkylsilylierende Mittel Trimethylchlorsilan ist.

**Revendications**

1. Plaque d'adsorbant à base de gel de silice ou d'alumine résistant à l'eau pour chromatographie en couche mince en phase inversée avec des hydroxyle alcoylsilylés, caractérisée en c que 10 à 40% des groupes hydroxyle dans l'adsorbant sont tri-(alcoyl inférieur)silylés.

2. Plaque comme revendiqué dans la revendication 1, dans laquelle 15 à 30% desdits groupes hydroxyle sont tri-(alcoyl inférieur)silylés.

3. Plaque comme revendiqué dans la revendication 1, dans laquelle 23% desdits groupes hydroxyle sont tri-(alcoyl inférieur)silylés.

4. Plaque comme revendiqué dans la revendication 1, dans laquelle lesdits groupes hydroxyle sont triméthylsilylés.

5. Plaque comme revendiqué dans l'une quelconque des revendications 1 à 4, dans laquelle ladite couche comprend un matériau fluorescent résistant aux acides.

6. Procédé de préparation d'une plaque d'adsorbant à base de gel de silice ou d'alumine résistant à l'eau pour chromatographie en couche mince en phase inversée avec des groupes hydroxyle alcoylsilylés caractérisé par la tri-(alcoyl inférieur)silylation d'une plaque résistant à l'eau pour chromatographie en couche mince classique de manière à ce que 10 à 40% des groupes hydroxyle dans l'adsorbant soient tri-(alcoyl inférieur)silylés.

7. Procédé comme revendiqué dans la revendication 6, dans lequel 15 à 30% desdits groupes hydroxyle sont tri-(alcoyl inférieur)silylés.

8. Procédé comme revendiqué dans la revendication 6, dans lequel 23% desdits groupes hydroxyle sont tri-(alcoyl inférieur)silylés.

9. Procédé comme revendiqué dans la revendication 6, dans lequel ladite plaque classique est trempée dans une solution de 0,1 à 10 p/p % d'un agent d'alcoylsilylation dans un solvant organique sous la pression atmosphérique à 10—30°C pendant 10 à 60 minutes.

10. Procédé comme revendiqué dans la revendication 9, dans lequel l'opération de trempage est réalisée sous une pression d'environ 40 mbars.

11. Procédé comme revendiqué dans la revendication 9, dans lequel ledit agent d'alcoylsilylation est un tri-(alcoyl inférieur)chlorosilane.

12. Procédé comme revendiqué dans la revendication 9, dans lequel ledit agent d'alcoylsilylation est le triméthylchlorosilane.